Europäisches Patentamt

European Patent Office

Office européen des brevets

(19)

(11) Numéro de publication: **0 021 971**
**B1**

(12) **FASCICULE DE BREVET EUROPEEN**

(45) Date de publication du fascicule du brevet:
**01.02.84**

(51) Int. Cl.³: **G 11 B 27/30**

(21) Numéro de dépôt: **80400872.0**

(22) Date de dépôt: **16.06.80**

(54) **Procédé de contrôle de lecture d'un enregistrement sonore par association d'un signal auxilaire à cet enregistrement.**

(30) Priorité: **18.06.79 FR 7915535**

(43) Date de publication de la demande:
**07.01.81 Bulletin 81/1**

(45) Mention de la délivrance du brevet:
**01.02.84 Bulletin 84/5**

(84) Etats contractants désignés:
**AT BE CH DE GB IT LI LU NL SE**

(56) Documents cités:
**DE - A - 2 448 445**
**FR - A - 1 602 102**
**FR - A - 2 279 191**
**FR - A - 2 338 542**
**FR - A - 2 384 320**
**US - A - 3 188 615**
**US - A - 3 591 731**
**US - A - 4 121 263**

**PATENTS ABSTRACTS OF JAPAN, vol. 3, no. 56 (E-115)**
**15 mai 1979 page 13 F110**
**PATENTS ABSTRACTS OF JAPAN, vol. 3, no. 66 (E-115) 7**
**juin 1979 page 60 E 114**

(73) Titulaire: **Société SCOME FRANCE, 60 route de la Vallée Haute Isle, F-95780 La Roche Guyon (FR)**

(72) Inventeur: **Kalinowski, Richard, 121, avenue de l'Ecole Navale, F-29200 Brest (FR)**

(74) Mandataire: **Thevenet, Jean-Bruno et al, Cabinet BEAU DE LOMENIE 55 rue d'Amsterdam, F-75008 Paris (FR)**

Procédé pour associer une information auxiliaire à une information principale
enregistrée et application au contrôle de la reproduction d'information enregistrée

La présente invention concerne un procédé de contrôle de lecture d'un enregistrement sonore exécuté sur au moins une piste d'un support d'enregistrement, suivant lequel on a inscrit en superposition sur une piste du support un signal auxiliaire séparable de l'enregistrement sonore, et, à la lecture, on sépare le signal auxiliaire dudit enregistrement sonore.

L'information auxiliaire est destinée à permettre, lors de la lecture de l'enregistrement sonore enregistré (parfois appelé encore, ci-après, signal principal), la réalisation de fonctions autres que la simple reproduction de cet enregistrement. Parmi ces fonctions, on peut citer par exemple la télécommande de dispositifs lumineux ou mobiles lors de la reproduction de musique enregistrée. Toutefois, l'application visée par la présente invention est le contrôle de la reproduction d'informations enregistrées sonores.

A l'heure actuelle, le contrôle de la reproduction, dans des lieux publics ou autres, d'enregistrements sonores, par exemple d'œuvres musicales et de chansons, est très difficile à réaliser de façon précise. Or ce contrôle sert à effectuer le compte des œuvres assujetties à redevances, notamment pour la répartition des droits d'auteur.

Un des buts de l'invention est donc de fournir des moyens permettant un contrôle rigoureux des reproductions d'enregistrements sonores afin de faciliter la prise en compte et la gestion des informations de contrôle recueillies.

On connaît déjà, par le document DE-A-2 448 445, la mise en œuvre d'un signal pilote modulé par des signaux d'horloge donnant des références de temps et superposé à un signal sonore, le spectre de modulation du signal pilote se situant en dehors de la bande de fréquences du signal sonore. Toutefois, dans le cas du procédé décrit dans le document précité, il n'est aucunement prévu de transmettre des informations auxiliaires autres que des indications de temps.

Par ailleurs, le document FR-A-1 602 102 concerne un dispositif de commande d'un appareil d'entraînement d'une bande magnétique dans lequel on utilise un signal de commande de faible niveau enregistré et mélangé avec les signaux d'information audio et vidéo et destiné à servir à la commande de fonctions telles que l'inversion du sens de défilement d'une bande ou le débrayage de l'entraînement de la bande. Le signal de commande est un signal basse fréquence (25 Hz) dont l'amplitude est limitée pour réduire au minimum l'effet de modulation que ce signal pourrait avoir sur les signaux du programme enregistré.

Dans ce document de l'art antérieur, il n'est pas question d'utiliser des informations auxiliaires codées utilisables à d'autres effets que pour la seule commande du défilement du support d'enregistrement.

Le brevet US 3 591 731 (STANCIL) prévoit également d'utiliser un signal auxiliaire superposé à un signal principal d'information sur une même piste de bande magnétique. Le signal auxiliaire est répété pendant tout l'enregistrement afin d'être décelable même lors d'une reproduction partielle de l'enregistrement. Le signal auxiliaire est toutefois limité à la fourniture d'indications de temps réel ou d'informations susceptibles d'être produites par des dispositifs en mouvement pouvant coopérer avec des générateurs du type selsyn. Il n'est ainsi pas question d'un signal auxiliaire, fortement atténué et codé pour transmettre des informations diverses autres que de simples informations répétitives produites à partir d'horloges ou compteurs.

D'une façon générale, l'invention a pour but d'associer un signal auxiliaire numérique à un enregistrement sonore enregistrée sur une piste au moins d'un support d'information et susceptible d'être lue au moyen d'un dispositif de lecture transformant l'information lue en un signal de lecture.

Ce but est atteint par un procédé selon lequel, conformément à l'invention, on déclenche, en réponse à la séparation de ce signal auxiliaire avec l'enregistrement sonore, un enregistrement de contrôle sur un support approprié et en ce que le signal auxiliaire est un signal numérique codé par dérive d'une fréquence pilote dans une gamme au-delà des fréquences audibles.

Le signal principal enregistré étant une information sonore, on utilise un signal auxiliaire qui est à une fréquence située en dehors du spectre des fréquences audibles, mais qui peut être parfaitement pris en compte à la reproduction par le dispositif de lecture. Au cours de la reproduction, le signal auxiliaire n'interfère pas avec le signal principal. A titre de précaution supplémentaire, lorsque le signal principal est enregistré sur le support d'information avec une amplitude inférieure à un seuil déterminé pour une fréquence donnée, on confère au signal auxiliaire une amplitude dont le niveau est inférieur de plusieurs dizaines de dB à celui dudit seuil déterminé à la fréquence du signal auxiliaire.

L'invention vise particulièrement un procédé permettant le contrôle de la reproduction d'un enregistrement sonore, notamment pour la prise en compte des œuvres assujetties à redevance.

Au cours de la lecture de l'enregistrement sonore, on détecte dans le signal de lecture la présence d'au moins un signal auxiliaire représentant sous forme codée numérique une information auxiliaire associée à l'enregistrement reproduit et se situant dans une gamme de fréquences au-delà des fréquences audibles et l'on enregistre l'information auxiliaire à la suite de cette détection.

Il suffit que l'information auxiliaire contienne l'identification de l'œuvre enregistrée et de son auteur pour que le procédé défini ci-dessus permette la prise en compte automatique de tous les enregistrements reproduits par un même dispositif de lecture. Lors de chaque détection d'un nouveau signal auxiliaire, l'information auxiliaire correspondante peut être stockée sur un support d'information associé au dispositif de lecture et permettant avantageusement l'exploitation ultérieure des informations auxiliaires recueillies sans intervention humaine.

L'invention sera mieux comprise à la lecture de la description faite ci-après, à titre indicatif, d'un mode particulier de sa mise en œuvre.

On se référera aux dessins joints sur lesquels:
— la figure 1 illustre des courbes de correction de niveau d'enregistrement et de reproduction de signal en fonction de la fréquence,
— la figure 2 est un schéma général d'un dispositif pour la mise en œuvre du contrôle de la reproduction d'enregistrements conformément à l'invention, et
— la figure 3 est un diagramme de signaux illustrant la détection et le décodage de l'information auxiliaire.

Dans ce qui suit, on traitera, à titre d'exemple, du contrôle de la reproduction d'enregistrements sonores (musique, chansons, ...) sur disques à gravure phonique ou sur bandes magnétiques, l'information enregistrée étant transformée en signal de lecture électrique au moyen d'une tête de lecture adaptée à la nature du support d'enregistrement.

S'agissant du contrôle de la reproduction d'enregistrements sonores, on associe à l'information sonore enregistrée un signal numérique auxiliaire contenant l'identification de l'œuvre enregistrée et de son auteur en vue du décompte ultérieur des œuvres assujetties à redevance et diffusées ou écoutées dans des lieux publics et autres.

D'une façon générale, le procédé conforme à l'invention consiste à coder l'information auxiliaire sous forme d'un signal numérique qui est superposé au signal principal lors de l'enregistrement mais qui se situe dans une gamme de fréquences limitée en dehors du spectre des fréquences audibles du côté des ultrasons (par exemple au-delà de 15 kHz).

Le signal auxiliaire, s'il n'est pas perceptible par l'homme est toutefois détecté lors de la lecture, ce qui permet de reconnaître et de décoder l'information auxiliaire avant de la stocker avec, éventuellement, d'autres informations telles que, par exemple la date, l'heure, le lieu et le nombre de fois où l'enregistrement a été reproduit.

Il est à remarquer que le signal auxiliaire numérique est enregistré sur la même piste que le signal principal suivant le procédé d'enregistrement particulier à chaque support: gravure phonique pour les disques, enregistrements magnétiques pour les bandes magnétiques en bobines ou cassettes. Ainsi, dans le cas d'une relecture pour enregistrement sur un support différent, le signal auxiliaire n'est pas perdu et sera toujours détectable.

Plusieurs possibilités sont offertes pour le codage de l'information auxiliaire en vue de produire un signal numérique auxiliaire codé. On peut faire appel à cette fin aux techniques connues de transmission de l'information numérique, utilisant des procédés connus de codage et de modulation.

Le signal auxiliaire peut par exemple être une »tranche« d'information de durée relativement courte, environ 5 à 10 secondes, constituée en plusieurs périodes comme suit.

Une première période est formée par un signal de fréquence fixe Fo située dans la gamme des fréquences inaudibles, par exemple entre 16 et 20 kHz.

Une seconde période contient une modulation de la fréquence Fo à un rythme de synchronisation numérique de bits (synchronisation primaire). La modulation est par exemple du type FSK (»Frequency Shift Keying«), la fréquence du signal modulé prenant la valeur $Fo+\Delta F$ ou $Fo-\Delta F$ selon la valeur de l'information binaire. $\Delta F$ est par exemple égal à quelques centaines de Hz.

Une troisième période contient un mot codé dit de synchronisation de format qui est commun aux enregistrements d'un même type et qui est utilisé pour déterminer l'instant à partir duquel commence exactement le message constituant l'information auxiliaire proprement dite (synchronisation secondaire).

La quatrième et dernière période contient ce message particularisant l'enregistrement auquel il est associé. Ce message pourra par exemple comporter les éléments d'identification du lieu où cet enregistrement a été effectué, de la date d'enregistrement, du numéro d'ordre à cette date, du laboratoire d'enregistrement, du titre de l'œuvre, du nom de l'auteur de l'œuvre.

Avantageusement, le signal auxiliaire est répété tout le long de l'enregistrement de manière à être pris en compte même si une partie seulement de l'enregistrement est reproduite. En outre, lorsque l'enregistrement sonore est réalisé sur plusieurs pistes, le même signal auxiliaire est enregistré au moins dans une zone et de préférence répété tout le long de chaque piste (cas de la stéréophonie).

Le signal auxiliaire est superposé au signal principal puis l'ensemble est enregistré sur le support d'enregistrement.

De préférence, le niveau du signal auxiliaire est choisi très inférieur à celui du signal principal.

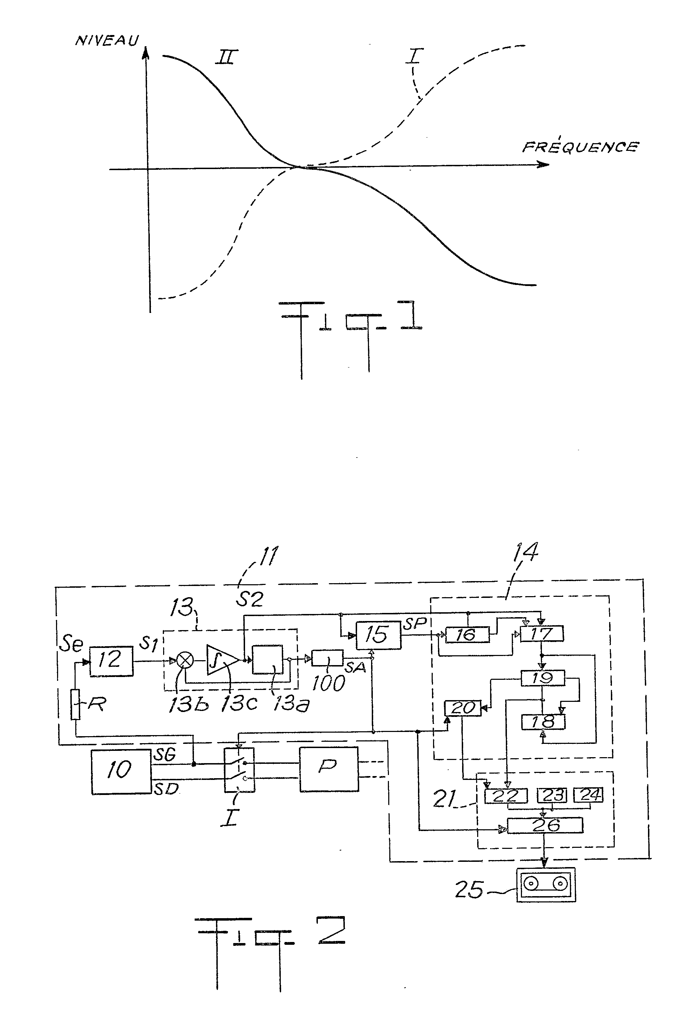

La figure 1 illustre les courbes montrant les corrections de niveau effectuées couramment à l'enregistrement (courbe I) et à la lecture (courbe II), en fonction de la fréquence, la somme donnant un niveau indépendant de la fréquence.

Avantageusement, le signal auxiliaire est enregistré à un niveau inférieur de plusieurs dizaines de dB à celui du niveau maximal d'enregistrement sonore pour la fréquence du signal auxiliaire, par exemple à −40 dB de ce seuil maximal. On remarque, d'après la figure 1, que cela représente après correction, un niveau situé à −80 dB au-dessous du niveau maximum du côté des basses fréquences. Le signal auxiliaire est alors non seulement dans la gamme des fréquences inaudibles, mais encore à un niveau imperceptible par un auditeur.

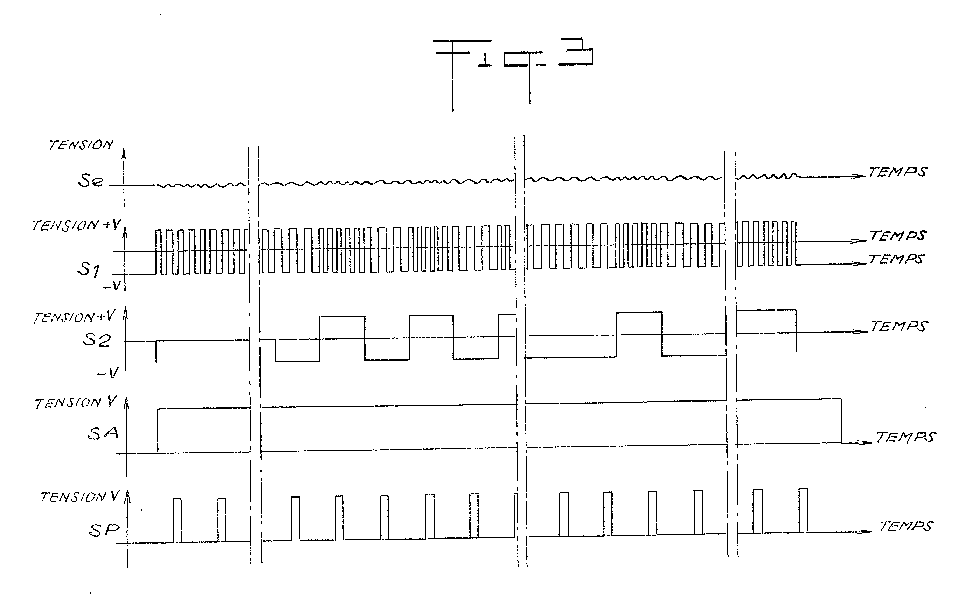

La figure 2 illustre schématiquement un dispositif permettant de détecter la présence d'un signal auxiliaire tel celui défini plus haut superposé à un signal principal dans les signaux de lecture fournis par une tête de lecture 10, (par exemple stéréophonique) parcourant deux pistes d'un support d'enregistrement (non représenté).

Les signaux de lecture SG et SD (voies gauche et droite) sont appliqués, d'une part, à l'entrée d'un circuit de préamplification P d'un dispositif de reproduction classique non représenté et, d'autre part, à l'entrée d'un circuit de détection 11 branché en dérivation à la sortie de la tête de lecture.

Le circuit de détection 11 comporte un circuit de filtrage et de remise en forme 12 recevant au moins un des signaux SG et SD (signal Se sur la figure 3) par l'intermédiaire d'une résistance R de valeur élevée de manière à ne pas perturber la liaison entre la tête de lecture et les circuits de reproduction. Le circuit 12 peut être constitué par une boucle de phase dont l'oscillateur commandé fournit en sortie un signal à une fréquence pouvant varier de part et d'autre de la fréquence Fo avec une excursion limitée. Le signal auxiliaire est amplifié et remis en forme (signal S1 sur la figure 3).

La largeur de la bande passante du circuit 12 est choisie en fonction de la largeur de bande occupée par la modulation et des variations possibles de la vitesse de lecture (au maximum environ 5% de part et d'autre de la vitesse nominale).

Un circuit démodulateur 13 est branché à la sortie du circuit 12 pour, d'une part, fournir à un circuit logique de décodage 14 un signal numérique démodulé (S2 sur la figure 3) et, d'autre part, commander un générateur 15 de signal de synchronisation de bits (signal de synchronisation primaire SP sur la figure 3).

Pour former le démodulateur 13, on pourra utiliser une boucle de phase centrée sur Fo comportant un oscillateur 13a commandé par tension, un comparateur de phase 13b recevant le signal S1 et le signal de sortie de l'oscillateur 13a, et un amplificateur intégrateur 13c recevant le signal d'erreur fourni par le comparateur 13b et commandant l'oscillateur 13a. Le signal S2 est prélevé en sortie de l'amplificateur 13c, chaque changement de signe de cette sortie correspondant à un passage de la fréquence

Fo $+ \Delta$F à Fo $- \Delta$F

ou inversement.

Le signal en sortie de l'oscillateur 13a indique l'accrochage du démodulateur 13. Ce signal d'accrochage déclenche le fonctionnement du générateur 15; puis le signal S2 est ensuite prépondérant pour la synchronisation de bits. Le signal d'accrochage est transformé en un signal continu SA (figure 3) ou signal d'autorisation qui revient à zéro un temps déterminé après la dernière impulsion émise par l'oscillateur 13a, par l'intermédiaire d'un circuit monostable redéclenchable 100.

Le circuit logique 14 comporte un circuit 16 de reconnaissance de format chargé par les bits décodés du signal S2 au rythme du signal SP. Lorsque la configuration correspondant au mot codé de synchronisation de format est reconnue dans le circuit 16 (synchronisation secondaire), celui-ci autorise le chargement des bits suivants dans un registre 17.

Le contenu du registre 17 est comparé au contenu d'un registre 18 au moyen d'un comparateur 19 qui, en cas d'égalité, incrémente un compteur 20 d'une unité et, en cas d'inégalité, commande le transfert dans le registre 18 du contenu du registre 17.

Lorsque, à titre de sécurité, le compteur 20 a compté un nombre prédéterminé d'égalités, le contenu du registre 18, c'est-à-dire l'information auxiliaire associée à l'enregistrement écouté, est transféré dans un registre 22 d'un circuit d'interface 21. Le circuit d'interface 21 contient en outre des registres 23, là où sont stockées d'autres informations, par exemple relatives à l'heure et à l'endroit où se produit la reproduction en cours.

Le transfert sur une bande magnétique en cassette 25 des contenus des registres 22, 23, 24 via l'organe de commutation 26 est commandé par le front arrière du signal SA signalant la fin de la reproduction. Le compteur 20 est remis à zéro.

Le circuit de détection 11 est prêt pour la détection et le transfert d'une nouvelle information auxiliaire, ou éventuellement de la même si le même enregistrement est réécouté.

Le signal auxiliaire est répété tout le long de la ou des pistes où l'information principale sonore est enregistrée, le signal SA est avantageusement utilisé comme signal de commande de fermeture d'un interrupteur I branché à l'entrée du préamplificateur P. Ainsi l'écoute d'un enregistrement ne peut avoir lieu que si le signal auxiliaire est détecté.

Bien entendu, diverses modifications ou adjonctions pourront être apportées au mode de réalisation décrit ci-dessus d'un procédé et d'un dispositif conformes à l'invention.

En particulier, d'autres techniques connues pourront être utilisées pour, d'une part, le codage de l'information auxiliaire et, d'autre part, la détection, le décodage et le transfert de cette information.

## Revendications

1. Procédé de contrôle de lecture d'un enregistrement sonore exécuté sur au moins une piste d'un support d'enregistrement, suivant lequel on a inscrit en superposition sur une piste du support un signal auxiliaire séparable de l'enregistrement sonore, et, à la lecture, on sépare le signal auxiliaire dudit enregistrement sonore, caractérisé en ce que l'on déclenche, en réponse à la séparation de ce signal auxiliaire, un enregistrement de contrôle sur un support approprié, et en ce que le signal auxiliaire est un signal numérique codé par dérive d'une fréquence pilote dans une gamme au-delà des fréquences audibles.

2. Procédé suivant la revendication 1, caractérisé en ce que ledit signal auxiliaire est inscrit à un niveau d'amplitude de plusieurs dizaines de décibels en-dessous du niveau maximal de l'enregistrement sonore.

3. Procédé suivant la revendication 1 ou la revendication 2, caractérisé en ce que le signal auxiliaire (S1, Fig. 3) comporte, après une période à fréquence fixe, une période de synchronisation primaire définissant un rythme de signal numérique, une période de synchronisation secondaire comprenant un groupe codé dit de format, puis un groupe codé spécifique de l'enregistrement sonore.

4. Procédé suivant l'une quelconque des revendications 1 à 3, caractérisé en ce que le signal auxiliaire est inscrit de façon répétée tout au long de l'enregistrement sonore.

5. Dispositif à associer à un lecteur d'enregistrement sonore, exécuté sur au moins une piste d'un support d'enregistrement, pour contrôler les lectures, le support comportant à cet effet sur une piste du support un signal auxiliaire inscrit en superposition, spécifique de l'enregistrement sonore, signal auxiliaire numérique codé par dérive d'une fréquence pilote dans une gamme au-delà des fréquences audibles, caractérisé en ce qu'il comporte un moyen de détection (13) de présence de signal auxiliaire relié au lecteur par un filtre passe-bande (12) centré sur ladite fréquence pilote, et délivrant un signal numérique démodulé, un générateur (15) de signal de synchronisation primaire activé par le moyen de détection, des moyens d'identification (16) d'un groupe codé de format pilotés par le générateur de synchronisation primaire, et des moyens de mise en mémoire (17—26) du signal numérique démodulé.

6. Dispositif selon la revendication 5, caractérisé en ce que ledit moyen de détection (13) comporte un oscillateur (13a) à fréquence commandée par tension et une boucle d'asservissement (13b, 13c) en phase sur le signal auxiliaire.

7. Dispositif selon la revendication 5 ou la revendication 6, caractérisé en ce que lesdits moyens de mise en mémoire comportent au moins un registretampon (17, 18) chargé par le signal numérique démodulé, et un moyen d'enregistrement périphérique (25) recevant le contenu du registre-tampon (17, 18).

8. Dispositif selon la revendication 7, caractérisé en ce que lesdits moyens de mise en mémoire comportent un premier (17) et un second (18) registres-tampons, un comparateur numérique (19) connecté entre le premier et le second registres-tampons, un premier moyen de transfert de contenu disposé entre les premier (17) et second (18) registres-tampons et un second moyen de transfert (21) entre le second registre-tampon (18) et le moyen d'enregistrement périphérique (25), ledit comparateur (19) activant le premier moyen de transfert en réponse à l'inégalité de contenu entre les premier et second registres-tampons (17, 18), et le second moyen de transfert (21) en réponse à une égalité de contenu.

9. Dispositif selon la revendication 8, caractérisé en ce qu'un compteur numérique (20) est branché entre le comparateur (19) et le second moyen de transfert (21), en sorte que le comparateur active ce second moyen de transfert (21) en réponse à une succession d'égalités de contenu en nombre déterminé.

## Patentansprüche

1. Verfahren zum Überwachen der Wiedergabe einer auf zumindest einer Spur eines Aufnahmeträgers erfolgten Tonaufnahme, bei welchem ein von der Tonaufnahme zu trennendes Hilfssignal auf einer Trägerspur in Überlagerung aufgezeichnet wurde und bei der Wiedergabe das Hilfssignal von der Tonaufnahme getrennt wird, dadurch gekennzeichnet, daß in Reaktion auf die Trennung dieses Hilfssignals eine Kontrollregistrierung auf einem entsprechenden Träger ausgelöst wird und daß das Hilfssignal ein numerisches Signal ist, welches durch Abweichung von einer Pilotfrequenz in einem Bereich jenseits der hörbaren Frequenzen kodiert wird.

2. Verfahren nach Anspruch 1, dadurch gekennzeichnet, daß das Hilfssignal in einer Amplitudenhöhe von mehreren zehn Dezibel unter der Maximalhöhe der Tonaufnahme aufgezeichnet wird.

3. Verfahren nach Anspruch 1 oder 2, dadurch gekennzeichnet, daß das Hilfssignal (S1, Fig. 3) nach einer Periode fixer Frequenz eine Periode primärer, einen Rhythmus des numerischen Signals definierender Synchronisation, eine Periode sekundärer Synchronisation mit einer kodierten Formatgruppe und schließlich eine spezifische kodierte Tonaufnahmegruppe umfaßt.

4. Verfahren nach einem der Ansprüche 1 bis 3, dadurch gekennzeichnet, daß das Hilfssignal derart aufgezeichnet wird, daß es sich über die gesamte Länge der Tonaufnahme wiederholt.

5. Vorrichtung zum Zuordnen zu einem Leser von einer auf zumindest einer Spur eines Aufnahmeträgers erfolgten Tonaufnahme zum Überwachen der Wiedergaben, wobei der Träger zu diesem Zweck auf einer Trägerspur ein überlagertes Hilfssignal umfaßt, welches spezifisch für die Tonaufnahme ist, wobei das numerische Hilfssignal durch Abweichung von einer Pilotfrequenz in einem Bereich jenseits der hörbaren Frequenzen kodiert ist, dadurch gekennzeichnet, daß sie eine Einrichtung (13) zum Erkennen des Vorhandenseins des Hilfssignals umfaßt, welche mit dem Leser durch ein auf die Pilotfrequenz abgestimmtes Bandpaßfilter (12) verbunden ist und ein demoduliertes numerisches Signal abgibt, einen durch die Erkennungseinrichtung aktivierten Generator (15) für das Signal primärer Synchronisation, Einrichtungen (16) zum Identifizieren einer kodierten Formatgruppe, die vom Generator primärer Synchronisation gesteuert sind, und Einrichtungen (17 bis 26) zum Speichern des demodulierten numerischen Signals.

6. Vorrichtung nach Anspruch 5, dadurch gekennzeichnet, daß die Erkennungseinrichtung (13) einen Oszillator (13a) mit spannungsgesteuerter Frequenz und einen Phasen-Regelkreis (13b, 13c) für das Hilfssignal umfaßt.

7. Vorrichtung nach Anspruch 5 oder 6, dadurch gekennzeichnet, daß die Einrichtungen zum Speichern zumindest einen das demodulierte numerische Signal enthaltenden Zwischenspeicher (17, 18) und eine den Inhalt des Zwischenspeichers (17, 18) empfangende periphere Aufnahmeeinrichtung (25) umfassen.

8. Vorrichtung nach Anspruch 7, dadurch gekennzeichnet, daß die Einrichtungen zum Speichern einen ersten (17) und einen zweiten (18) Zwischenspeicher, einen zwischen dem ersten und dem zweiten Zwischenspeicher geschalteten numerischen Komparator (19), ein erstes, zwischen dem ersten (17) und dem zweiten (18) Zwischenspeicher angeordnetes Inhaltsübertragungsmittel und ein zweites Übertragungsmittel (21) zwischen dem zweiten Zwischenspeicher (18) und der peripheren Aufnahmeeinrichtung (25) umfaßt, wobei der Komparator (19) das erste Übertragungsmittel als Reaktion auf die Ungleichheit zwischen dem Inhalt des ersten und des zweiten Zwischenspeichers (17, 18) und das zweite Übertragungsmittel (21) als Reaktion auf eine Inhaltsgleichheit betätigt.

9. Vorrichtung nach Anspruch 8, dadurch gekennzeichnet, daß ein numerischer Zähler (20) zwischen dem Komparator (19) und dem zweiten Übertragungsmittel (21) derart angeschaltet ist, daß der Komparator dieses zweite Übertragungsmittel als Reaktion auf eine Folge von Inhaltsgleichheiten in bestimmter Anzahl aktiviert.

## Claims

1. A method of verifying the playback of an audio recording executed on at least one track of a recording medium, wherein an auxiliary signal separable from the audio recording has been superimposed on one track of the medium, and, on playback, the auxiliary signal is separated from said audio recording, characterized in that a verification recording on a suitable medium is started in response to the separation of said auxiliary signal, and that the auxiliary signal is a digital signal enclosed by variations of a pilot frequency in a range beyond the audible frequencies.

2. A method according to claim 1, characterized in that said auxiliary signal is recorded at an amplitude level several tens of decibels below the maximum level of the audio recording.

3. A method according to claim 1 or 2, characterized in that the auxiliary signal (S1, Fig. 3) comprises, after a period of fixed frequency, a primary synchronization period defining a digital signal rate, a secondary synchronization period containing an encoded group called a format group, and thereafter an encoded group specific to the audio recording.

4. A method according to any of claims 1 – 3, characterized in that the auxiliary signal is recorded repeatedly along the whole length of the recording.

5. A device for use in connection with a playback apparatus for audio recordings executed on at least one track of a recording medium, for verifying the playbacks, for which purpose the medium contains, on one track of the medium, a superimposed auxiliary signal specific to the audio recording, said auxiliary signal being digitally encoded by variations of a pilot frequency in a range beyond the audible frequencies, characterized in that it comprises auxiliary signal presence detecting means (13) connected to the playback apparatus via a band-pass filter (12) centered on said pilot frequency, and delivering a demodulated digital signal, a primary synchronization signal generator (15) activated by the detecting means, means (16) for identifying an encoded format group controlled by the primary synchronization generator, and memory storage means (17 – 26) for the demodulated digital signal.

6. A device according to claim 5, characterized in that said detecting means (13) comprises a voltage-controlled oscillator (13a) and a control loop (13b, 13c) phase locked to the auxiliary signal.

7. A device according to claim 5 or 6, characterized in that said memory storage means comprise at least one buffer register (17, 18), into which the demodulated digital signal is loaded, and a peripheral recording means (25) receiving the content of the buffer register (17, 18).

8. A device according to claim 7, characterized in that said memory storage means comprise a first (17) and a second (18) buffer register, a digital comparator (19) connected between the first and second buffer registers, a first content transfer means provided between the first (17) and second (18) buffer registers and a second transfer means (21) between the second buffer register (18) and the peripheral recording means (25), said comparator (19) activating the first transfer means in response to the contents of the first and second buffer registers (17, 18) being unequal, and the second transfer means (21) in response to equal contents.

9. A device according to claim 8, characterized in that a digital counter (20) is connected between the comparator (19) and the second transfer means (21) in such a manner, that the comparator activates said second transfer means (21) in response to a sequence of a predetermined number of equalities of contents.

NIVEAU

II

I

FRÉQUENCE

Fig. 1

Fig. 2

Fig. 3